# EUROPEAN PATENT APPLICATION

(11) **EP 1 365 496 A2**
(43) Date of publication of application: **26.11.2003**
(21) Application number: 03010737.9
(22) Date of filing: 14.05.2003
(51) Int. Cl.: H02K 7/09, H02K 5/16

(54) **Miniature motor**

(30) Priority: 24.05.2002 JP 2002151181
(71) Applicant: MABUCHI MOTOR CO., LTD, Matsudo-shi, Chiba 270-2280 (JP)
(72) Inventor: Wakita, Tadayuki, Matsudo-shi, Chiba 270-2280 (JP); Sata, Nobuyuki, Matsudo-shi, Chiba 270-2280 (JP); Ogino, Hisashi, Matsudo-shi, Chiba 270-2280 (JP); Furukawa, Shinji, Matsudo-shi, Chiba 270-2280 (JP); Kadooka, Kazuo, Matsudo-shi, Chiba 270-2280 (JP); Itaya, Hideki, Matsudo-shi, Chiba 270-2280 (JP)
(74) Representative: Reichel, Wolfgang, Dipl.-Ing.

(57) **Abstract**

A motor in which an attracting magnet for attraction between a rotor and a stator is used in the present invention. The attracting magnet is formed into a hollow cylindrical shape such as to have two flat surfaces between which a predetermined thickness is defined. The attracting magnet is magnetized so as to have different polarities at the inner and outer circumference sides divided in the radial direction in each of its two flat surfaces, and to be reversed in polarity in an interchanging manner between its two flat surfaces. The attracting magnet is mounted on an inner surface of a rotor case while being opposed to a bearing housing. In this motor using the attracting magnet arrangement, the shaft is not magnetized even though the attracting magnet for attraction of the rotor toward the stator is used. Magnetic dust in air and iron powder from a surrounding region are prevented from entering the gap between the shaft and the bearing or the gap between the shaft and the shaft seat, and hysteresis braking and eddy current braking are also prevented.

## Description

### BACKGROUND OF THE INVENTION

### 1. Field of the Invention

The present invention relates to a miniature motor having a magnetic attraction mechanism using an attracting magnet for attraction between a rotor and a stator.

### 2. Description of the Related Art

As an outer-rotor-type brushless motor having a cantilever bearing construction, an arrangement is known in which an attracting magnet is provided separately from a drive magnet to attract a rotor case in a direction toward a stator.

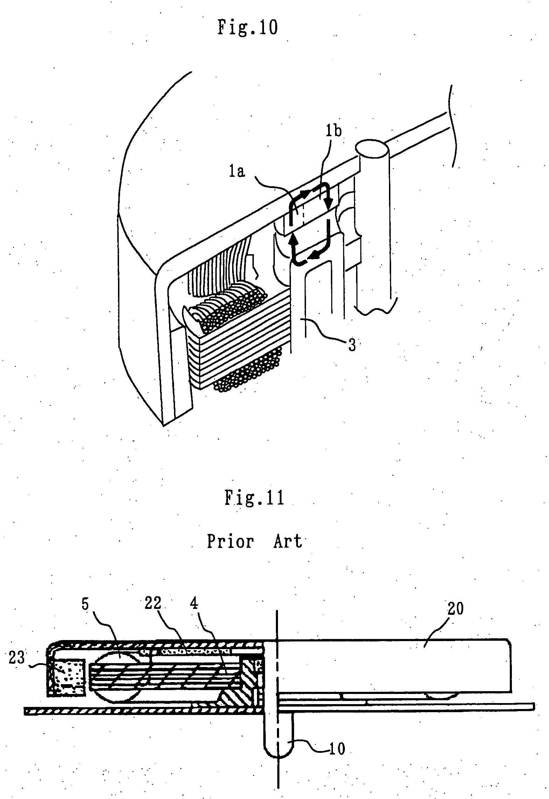

FIG. 11 is a diagram showing a miniature motor disclosed in Japanese Utility Model Laid-Open No. 63-100979. In this miniature motor, a stator core 4 with coils 5 constitutes a stator, while a rotor case 20 fixed to a shaft 10 at its center and a drive magnet 23 mounted on the rotor case 2 constitute a rotor. This motor has an attracting magnet 22 mounted on an inner surface of the rotor case 20 to attract the rotor in the direction toward the stator core 4 on the stator side.

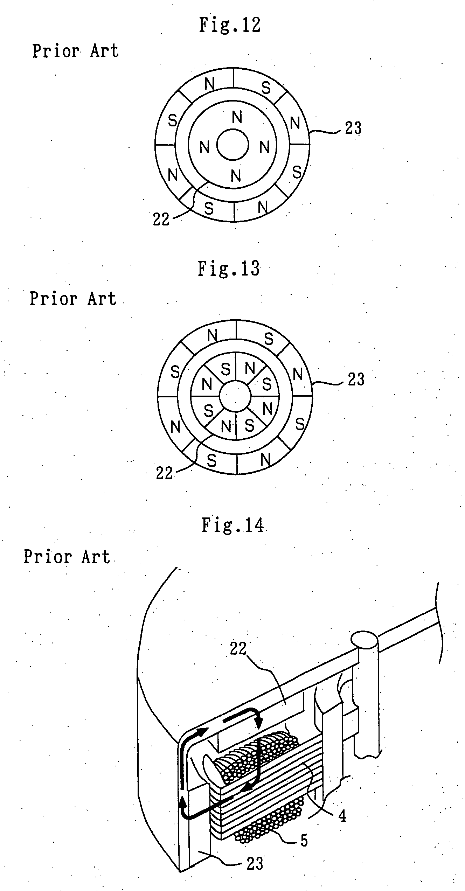

In the first conventional art, the attracting magnet 22 has an N pole on its one side and an S pole on the opposite side polarized along the axial direction, as shown in FIG. 12. That is, the entire surface facing the stator core 4 is one magnetic pole (e.g., N pole).

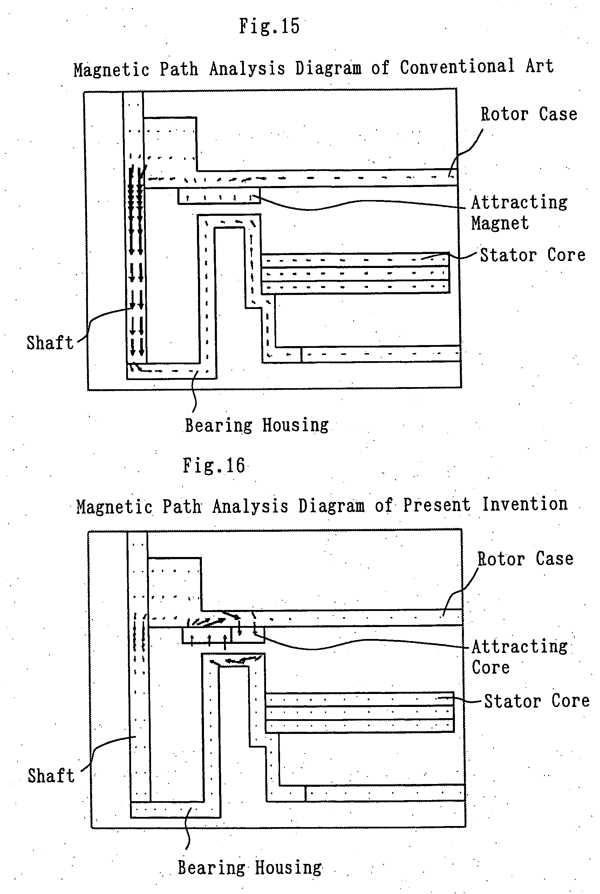

This magnetic pole formation, however, entails a drawback in that a foreign material and a magnetic powder are attached to the shaft 10. This is because the shaft 10 forms a magnetic path for the attracting magnet 22. The magnetic flux from the attracting magnet 22, for example, from the N pole enters the opposite stator core 4 through the gap and returns finally to the S pole of the attracting magnet on a mount surface for mounting on the rotor case 20. However, in the course of returning through various paths, part of the magnetic flux passes through the shaft. The existence of this flow of magnetic flux has also been confirmed from a magnetic path analysis diagram such as shown in FIG. 15. This analysis diagram shows the results of magnetic field analysis made by setting predetermined conditions for simulation of a motor and indicating the direction and value of the magnetic flux flowing through each magnetic path by the direction and length of arrows. The analysis results show that a substantial part of the magnetic flux from the attracting magnet passes through the shaft.

Since the shaft 10 is magnetized as described above, it attracts, for example, magnetic dust in air and iron powder. If such a material enters the gap between the shaft 10 and the bearing or the gap between the shaft 10 and a shaft seat 9, the normal bearing function cannot be performed.

In the second conventional art, the attracting magnet 22 has, for example, eight magnetic poles polarized so that, as shown in FIG. 13, N and S poles appear alternately along the circumference. Magnetic paths from such magnetic poles will be described with reference to FIG. 14. The greater part of the magnetic flux from the attracting magnet 22 enters the stator core 4. Since the attracting magnet 22 has N and S poles divided so as to appear alternately along the circumference as shown in FIG. 13, the direction of magnetic flux from the attracting magnet 22 seen from some fixed position on the surface of the stator core 4 facing the attracting magnet 22 changes with the rotation of the rotator. That is, as the rotor case 20 rotates, the direction of magnetic flux in the magnetic path for the attracting magnet changes alternately, so that hysteresis braking and eddy current braking occur to cause torque loss. For example, in the arrangement shown in FIG. 11, hysteresis braking and eddy current braking occur between the attracting magnet 22 and the stator core 4.

### SUMMARY OF THE INVENTION

In view of the above-described problem, an object of the present invention is to provide a motor in which even though an attracting magnet for attracting the rotor in a direction toward the stator is used, the shaft is not magnetized and, therefore, magnetic dust in air and iron powder from a surrounding region do not enter the gap between the shaft and the bearing or the gap between the shaft and the shaft seat, and which can therefore perform the normal bearing function with reliability.

Another object of the present invention is to provide an attracting magnet construction such that hysteresis braking and eddy current braking do not occur.

A miniature motor having a magnetic attraction mechanism according to the present invention uses an attracting magnet for attraction between a rotor and a stator. The attracting magnet is formed into a hollow cylindrical shape such as to have two flat surfaces between which a predetermined thickness is defined. The attracting magnet is magnetized so as to have different polarities at the inner and outer circumference sides divided in the radial direction in each of its two flat surfaces, and to be reversed in polarity in an interchanging manner between its two flat surfaces. One of the flat surfaces of the attracting magnet is opposed to a mated member to be attracted (the rotor or the stator), while the other of the flat surfaces is mounted on the rotor side or the stator side.

The stator is formed by placing a stator core with coils on an outer peripheral portion of a bearing housing which journals a rotor shaft. This bearing housing is made of a high-permeability material and has a flat surface facing the rotor. This flat surface is opposed to the attracting magnet mounted on the rotor, or the attracting magnet is mounted on this flat surface.

Alternatively, the attracting magnet is formed by combining a magnet formed into a hollow cylindrical shape such as to have two flat surfaces between which a predetermined thickness is defined, and an attracting yoke made of a high-permeability material and formed into a hollow cylindrical shape such as to have two flat surfaces between which a predetermined thickness is defined. The magnet in the attracting magnet is magnetized so as to have only one polarity in each of the two flat surfaces, the polarities in the two flat surfaces being made different from each other. The magnet and the attracting yoke are set in different positions as seen in the radial direction. One of the flat surfaces of each of the magnet and said attracting yoke constituting the attracting magnet is opposed to a mated member to be attracted, while the other of the flat surfaces is mounted on the rotor side or the stator side.

### BRIEF DESCRIPTION OF THE DRAWINGS

FIG. 1 is a top view of a miniature motor shown by partially cutting a rotor case away, the miniature motor representing an embodiment of the present invention;
FIG. 2 is a sectional side view of the miniature motor illustrated in FIG. 1;
FIGS. 3A and 3B are perspective views of a bearing housing seen in different directions;
FIG. 4 is a diagram for explaining an attracting magnet which is a feature of the present invention;
FIG. 5 is a diagram for illustrating a method of magnetizing in a division manner a magnetic member integrally formed from a magnetic material into the shape of a ring;
FIGS. 6A and 6B showing a state corresponding to that shown in FIG. 5 are diagrams for explaining a method of separately performing two magnetizing operations;
FIG. 7 is a diagram showing an example of an arrangement in which the thicknesses of an outer-circumference magnet and an inner-circumference magnet in the axial direction are set to different values;
FIG. 8 is a diagram showing an example of an arrangement in which two magnets are spaced apart from each other in the radial direction;
FIG. 9 is a diagram showing an example of an arrangement in which one of the two magnets is mounted on a rotor case while the other magnet is mounted on the stator side;
FIG. 10 is a diagram for explaining a magnetic path of attracting magnet 1;
FIG. 11 is a diagram showing a miniature motor disclosed in Japanese Utility Model Laid-Open No. 63-100979;
FIG. 12 is a diagram for explaining a first conventional art;
FIG. 13 is a diagram for explaining a second conventional art;
FIG. 14 is a diagram for explaining a magnetic path from a magnetic pole in the conventional art;
FIG. 15 is a magnetic field analysis diagram of the conventional art; and
FIG. 16 is a diagram showing the results of magnetic field analysis on a motor arranged on the basis of the present invention;
FIG. 17 shows an example of a miniature motor which is similar to that illustrated in FIG. 2 but differs in that an attracting yoke is formed in place of the two attracting magnets;
FIG. 18 is a diagram showing the same construction as that of the miniature motor illustrated in FIG. 2 except that a magnet yoke for an attracting magnet is provided;
FIG. 19 is a bottom view of the rotor of the miniature motor as seen from below in FIG. 18;
FIGS. 20A and 20B are a cross-sectional view and a plan view, respectively, of the magnet yoke; and
FIG. 21 is a diagram for explaining mounting of the magnet yoke on the rotor case.

### DETAILED DESCRIPTION OF THE PREFERRED EMBODIMENTS

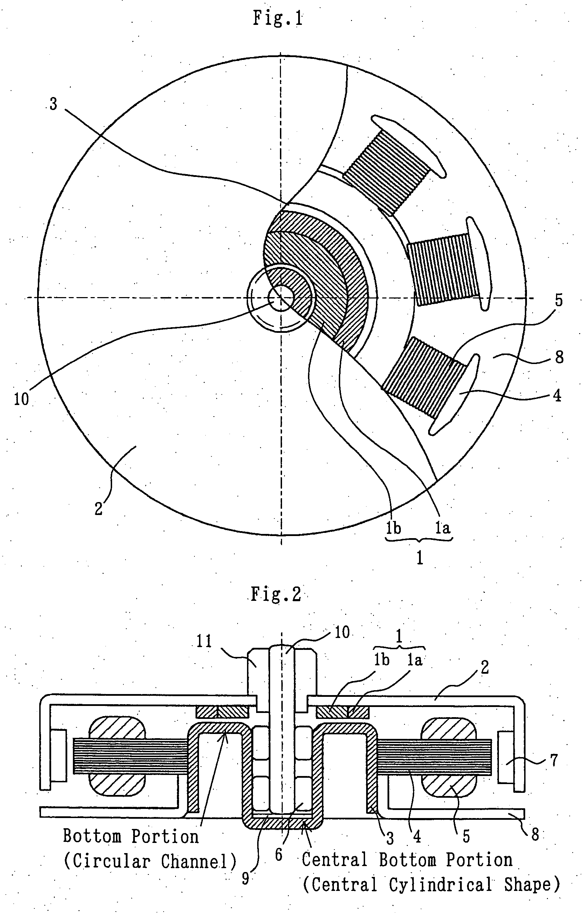

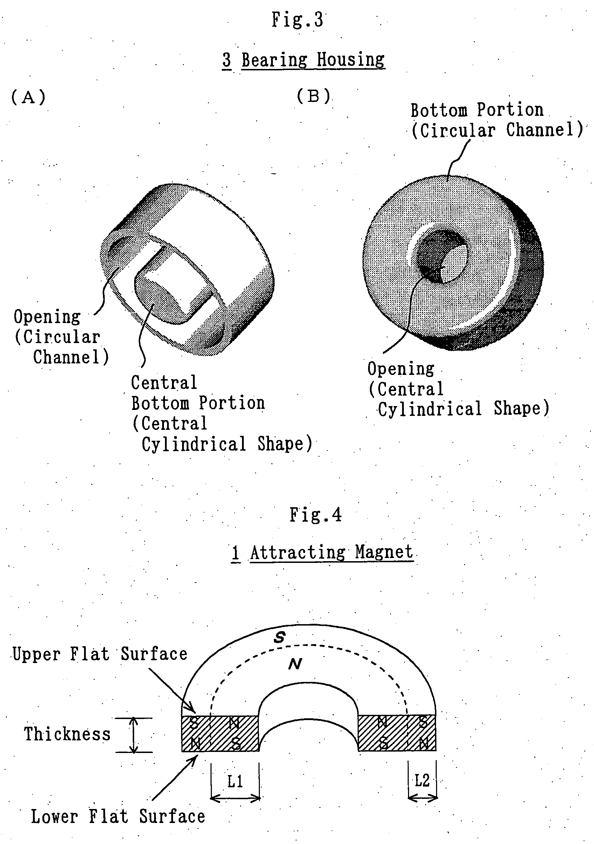

The present invention will be described with respect to an embodiment thereof. FIGS. 1 and 2 are a top view and a sectional side view, respectively, of a miniature motor which represents an embodiment of the present invention. In FIG. 1, the rotor case is partially cut away. FIGS. 3A and 3B are perspective views of a bearing housing seen in different directions.

The illustrated miniature motor is an outer-rotor-type brushless spindle motor having a cantilever bearing construction. On the stator side in this miniature motor, a stator core 4 with coils 5 is provided on an outer peripheral portion of a bearing housing 3 mounted in a hole of a mount plate 8. As shown in FIG. 3, the bearing housing 3 is integrally formed by drawing from one circular plate made of a high-permeability material constituted of, for example, iron, cobalt and nickel. The bearing housing 3 is formed so as to have a central cylindrical portion having a central bottom portion and an opening, and a circular channel portion formed continuously with the central cylindrical portion on the outer circumference side of the same, the circular channel portion having a bottom and an opening positioned opposite in the axial direction from the central bottom portion and the opening, respectively, of the central cylindrical portion. By being worked by drawing instead of machining so as to form these portions, the bearing housing can be made at a low cost. Also, since a high-permeability material is selected, the bearing housing can have the function of providing a magnetic path for an attracting magnet. As shown in FIG. 2, a hollow oil-containing bearing 6 is provided in the central cylindrical portion to support a shaft 10, and a shaft seat 9 for supporting an end of the shaft 10 inserted through the opening of the central cylindrical portion is provided on the central bottom portion in the central cylindrical portion. Preferably, the bottom portion in the circular channel portion is formed so as to be flat and so that its outer surface faces an attracting magnet 1 described below in detail.

A rotor case 2 fixed to the shaft 10 at its center (by a boss 11) and a drive magnet 7 mounted on the rotor case 2 constitute a rotor. This magnet 7 has a cylindrical shape such that it faces the stator core 4 in the radial direction from the outside of the stator core 4, with a gap formed therebetween. The illustrated brushless motor is provided with an electronic commutator circuit (not shown), which detects the rotating angular position of the rotor by using Hall elements or the like (not shown) and controls currents respectively flowing through the plurality of coils 5 on the basis of a detection signal indicating the detected position. The electronic commutator circuit is known per se and has no direct relation to the present invention. Therefore no further description will be made of it.

In the illustrated miniature motor, the attracting magnet 1 in a hollow cylindrical form is mounted on the rotor case 2 by bonding or the like in a state of being maintained coaxially with the shaft axis and facing the outer surface of the bottom portion in the circular channel portion of the bearing housing 3 on the stator side. The attracting magnet 1 is formed and magnetized in a particular way in accordance with the present invention. That is, the attracting magnet 1 is formed as a hollow cylindrical member having a predetermined thickness and having two flat surfaces formed as a mount surface for mounting on the rotor case 2 and another surface formed on the opposite side so as to face the bottom portion in the circular channel portion. The attracting magnet 1 is magnetized so as to have different polarities at the inner and outer circumference sides divided in the radial direction in each of its two flat surfaces, and to be reversed in polarity in an interchanging manner between its two flat surfaces.

FIG. 4 is a diagram for explaining the attracting magnet 1 which is a feature of the present invention. The attracting magnet 1 is hollow and cylindrical and is uniform in thickness as a whole, as mentioned above, but only half of the attracting magnet 1 is illustrated in FIG. 4 for ease of explanation. As illustrated, the two flat surfaces between which the thickness is constant are magnetized so as to have different polarities divided in the radial direction while being reversed in polarity in an interchanging manner. For example, if the magnet has an N pole at the inner circumference side in one of the flat surfaces (the upper flat surface as seen in the figure), the polarity in this surface at the outer circumference side is S. Conversely, in the opposite flat surface (the lower flat surface as seen in the figure), the polarity at the inner circumference side is S and the polarity at the outer circumference side is N. Preferably, the division (ratio of L1 and L2) between the inner circumference side and the outer circumference side in the radial direction is such that the numbers of magnetic flux lines from the two magnetic poles are equal to each other. For example, the division in each flat surface may be made so that the corresponding surface areas are equal to each other.

FIG. 10 is a diagram for explaining magnetic paths of the attracting magnet 1. As shown in FIG. 10, if the polarity at the inner circumference side in the flat surface of the attracting magnet 1 facing the bearing housing 3 is N, the magnetic flux from this pole enters the flat bottom portion in the circular channel portion of the bearing housing 3 through the gap, flows radially outwardly therefrom, goes out of the bottom portion of the bearing housing 3, and returns to the S pole at the outer circumference side through the gap. At the rotator case 2 mount side of the attracting magnet 1, the magnetic flux from the N pole at the outer circumference end flows in the rotor case 2 made of a high-permeability material and returns to the S pole at the inner circumference side. As mentioned above, only the magnetic path through which the magnetic flux circulates virtually may be formed as illustrated by equalizing the numbers of magnetic flux lines from the magnetic poles at the inner and outer circumference sides. In this manner, the leak from these members can be virtually eliminated or reduced. FIG. 16 is a diagram showing the results of magnetic field analysis made on the illustrated motor. It can be understood that the leakage flux to the shaft, etc., is remarkably reduced in comparison with that in the conventional art shown in FIG. 15.

The illustrated magnetic pole configuration is symmetric about the shaft and the intensity of the magnetic field along one circumferential line is constant. Therefore, the intensity of the magnetic field between the rotor and the stator seen from some fixed position on the stator core 4 surface is substantially constant with respect to any point on the rotor when the rotor is rotating. Consequently, no hysteresis braking and eddy current braking such as those observed in the case of the conventional art occur.

Also, the axial distance between the attracting magnet 1 and the flat bottom portion formed in the circular channel portion of the bearing housing 3 can be reduced, so that a sufficiently large attraction force can be exerted from the attracting magnet 1 even if the volume of the attracting magnet 1 is small.

The attracting magnet 1 may be mounted, for example, on the bearing housing 3 on the stator side instead of being mounted on the rotor case 2 to form a magnetic flux path similar to that described above and to obtain the same effect.

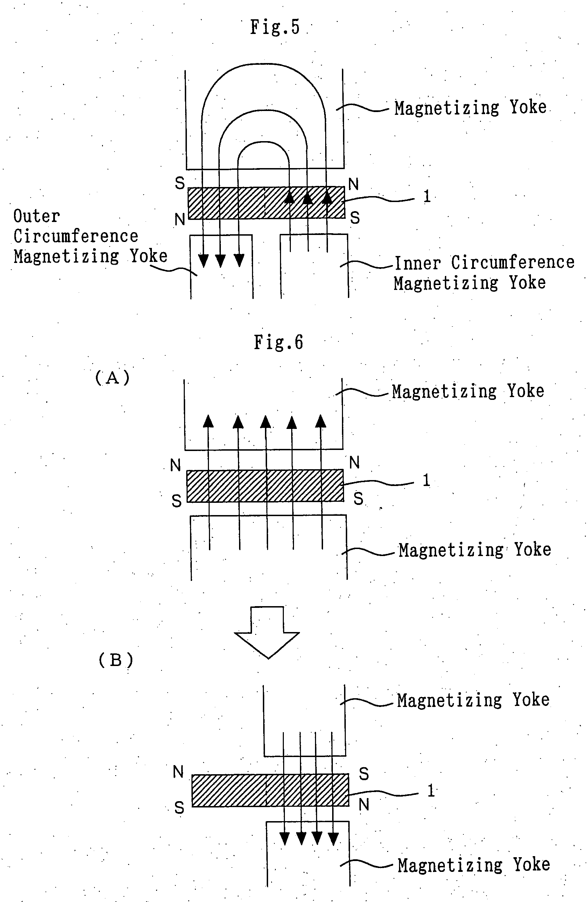

While the attracting magnet 1 arranged as described above with reference to FIG. 4 is divided between the inner and outer circumference sides with respect to magnetic polarity, it can be integrally formed of one magnetic material. FIG. 5 is a diagram for illustrating a method of magnetizing in a division manner a magnetic member integrally formed from a magnetic material into the shape of a ring. In FIG. 5, only half of the attracting magnet is shown in section. A magnetizing yoke facing one of the two surfaces of the attracting magnet 1 shown in section in FIG. 5 (the upper surface as seen in the figure) is formed as one member from the inner circumference side to the outer circumference side, while separate magnetizing yokes are opposed to the other surface (the lower surface as seen in the figure) respectively at the inner and outer circumference sides. In this arrangement, the magnetic flux from the magnetizing yoke facing the lower surface at the inner circumference side passes through the magnetic material for forming the attracting magnet 1, enters the magnetizing yoke facing the upper surface, is turned in this yoke to enter the magnetic material at the outer circumference side, passes through the same, and enters the magnetizing yoke facing the lower surface at the outer circumference side. This arrangement enables the magnetic poles divided between the inner and outer circumference sides to be formed by one magnetizing operation.

FIGS. 6A and 6B showing a state corresponding to that shown in FIG. 5 are diagrams for explaining a method of separately performing two magnetizing operations. In the first magnetizing operation, as shown in FIG. 6A, magnetizing yokes are placed on the opposite sides of the magnetic member for forming the attracting magnet to magnetize the member so that an S pole is formed through the whole of one of the two surfaces (from the inner circumference end to the outer circumference end) and an N pole is formed through the whole of the other surface. Next, in the second magnetizing operation, as shown in FIG. 6B, magnetizing yokes are placed on the opposite sides of the member only at the inner circumference side (or at the outer circumference side) to perform magnetization in the direction opposite to that in which the first magnetization is performed. Thus, the magnetic poles divided between the inner and outer circumference sides can be formed by two magnetizing operations.

Alternatively, the attracting magnet 1 can consist of two magnets. Two hollow cylindrical magnets differing in diameter are formed separately from each other and are integrally combined with each other to form substantially the same attracting magnet 1 as that illustrated in FIG. 4. An outer-circumference magnet 1a and an inner-circumference magnet 1b are provided. The inside diameter of the outer-circumference magnet 1a is approximately the same as the outside diameter of the inner-circumference magnet 1b. The outer-circumference magnet 1a and the inner-circumference magnet 1b are combined to form a virtually single, hollow cylindrical magnet. The magnetic poles of the outer-circumference magnet 1a and the inner-circumference magnet 1b are formed so as to have the same relationship as that in the integral construction described above with reference to FIG. 4, that is, the magnetic poles are reversed in an interchanging manner.

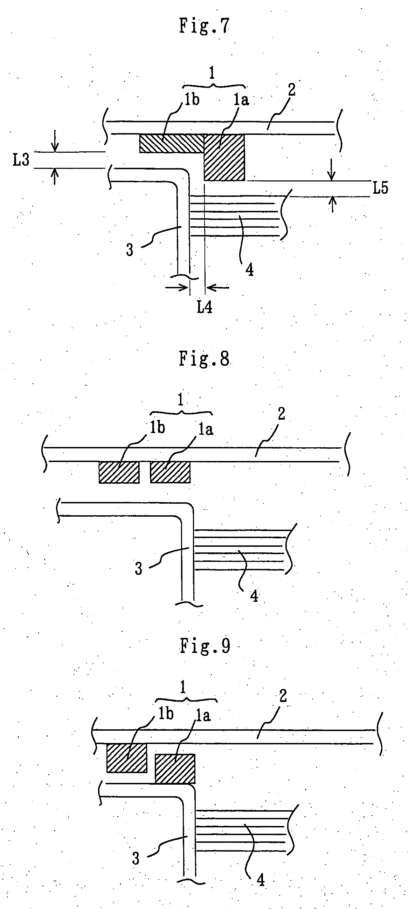

FIG. 7 is a diagram showing an example of an arrangement in which the outer-circumference magnet 1a and the inner-circumference magnet 1b have different thicknesses in the axial direction. In the example described above with reference to FIG. 2, the attracting magnet 1 is mounted so that its entire surface is opposed to the bearing housing. Positioning of the magnet relative to the bearing housing is not limited to this. The attracting magnet 1 may be mounted in such a manner that some part of the attracting magnet 1 faces the stator core 4 at a position near the bearing housing 3.

In the case illustrated in FIG. 7, it is desirable that the distance L3 between the inner-circumference magnet 1b and the bearing housing 3 opposed to each other in the axial direction, the distance L4 between the outer-circumference magnet 1a and the bearing housing 3 in the radial direction and the distance L5 between the outer-circumference magnet 1a and the stator core 4 opposed to each other in the axial direction should be optimum distances approximately equal to each other. That is, a spacing equal to or larger than a predetermined value is required between the rotating rotor and the stationary stator. However, if this spacing is increased, the magnetic resistance is increased and the attraction force is reduced. In the illustrated example, therefore, the thicknesses of the outer-circumference magnet 1a and the inner-circumference magnet 1b respectively mounted on the rotor case 2 in the axial direction are set to different values, thereby setting the distances to the bearing housing 3 and the stator core 4 to optimum values approximately equal to each other.

This arrangement ensures that the placement of the attracting magnet 1 can be optimized with respect to various stator shapes. Further, the magnet can be formed so as to have an increased opposed area, thereby enabling a large attraction force to be exerted with reliability.

FIG. 8 shows an example of an arrangement in which the two magnets 1a and 1b are spaced apart from each other in the radial direction. The outside diameter of the inner-circumference magnet 1b is smaller than the inside diameter of the outer-circumference magnet 1a. In this arrangement, the amount of useless magnetic flux shorted which does not enter the opposed bearing housing due to shorting between the two magnets is reduced to achieve a reduction in the amount of the magnet material. Also, the need for strictly controlling the dimensional accuracy with respect to the inside diameter of the outer-circumference magnet 1a and the outside diameter of the inner-circumference magnet 1b can be eliminated.

FIG. 9 shows an example of an arrangement in which one magnet 1b is mounted on the rotor case 2 while the other magnet 1a is mounted on the stator (bearing housing 3). The inside diameter of the outer-circumference magnet 1a is increased relative to the outside diameter of the inner-circumference magnet 1b so that the two magnets can be spaced apart from each other in the radial direction. This arrangement also has the same effects as those in the case of the arrangement illustrated in FIG. 8.

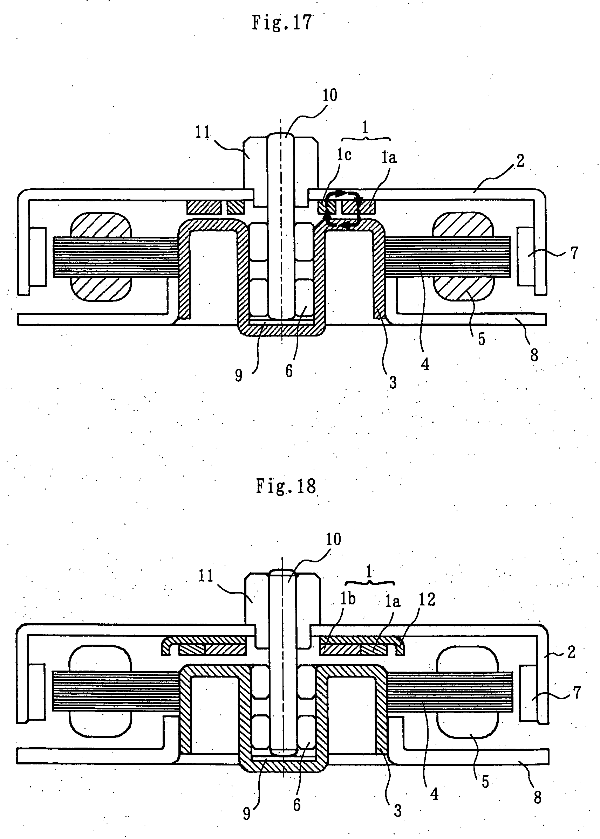

FIG. 17 shows an example of a miniature motor which is similar to that illustrated in FIG. 2 but differs in that an attracting yoke is formed in place of the two attracting magnets. The attracting magnet 1 shown in FIG. 17 consists of a magnet 1a and an attracting yoke 1c. The magnet 1a itself is formed into a hollow cylindrical shape and is magnetized (by single-pole magnetization) so as to have only one magnetic pole in each of the two surfaces on the opposite sides in the shaft axial direction (the vertical direction as viewed in the figure), the magnetic poles in the two surfaces being made different from each other, as is the magnet illustrated in FIG. 2. On the other hand, the attracting yoke 1c is formed into a hollow cylindrical shape from a high-permeability material constituted of, for example, iron, cobalt and nickel. The magnet 1a and the attracting yoke 1c are combined by being placed about the shaft axis concentrically with the same at different positions as seen in the radial direction. It is desirable that the magnet 1a and the attracting yoke 1c be placed while being spaced apart from each other in the radial direction.

Further, the attracting magnet 1 can be mounted on the bearing housing 3 as well as on the rotor case 2, as is that in the above-described example. Also, one of the two elements may be separated and only one of them may be mounted on the stator side, as in the arrangement illustrated in FIG. 9. Also, the magnet 1a and the attracting yoke 1c may be made different in thickness from each other, as in the arrangement illustrated in FIG. 7.

The motor is thus arranged to form the magnetic path for the attracting magnet 1 as indicated by the arrows in FIG. 17. That is, it is possible to ensure that the shaft 10 does not form a magnetic path. This is because in the illustrated arrangement the distance between the attracting yoke 1c and the bearing housing 3 is so small that the magnetic resistance of the main magnetic path is smaller than that of the magnetic path formed in the shaft 10.

The surface area of the attracting yoke 1c can be reduced relative to that of the magnet 1a. This is because the permeability of the high-permeability material forming the attracting yoke 1c, e.g., one constituted of iron, cobalt and nickel is higher than that of the magnet, and the attracting yoke 1c has a higher saturated magnetic flux density. For example, in the illustrated arrangement, an attracting magnet made of rare-earth material 4 MGOe is used, the surface area of the attracting yoke can be set to about 1/5 to 1/10 of the surface area of the magnet.

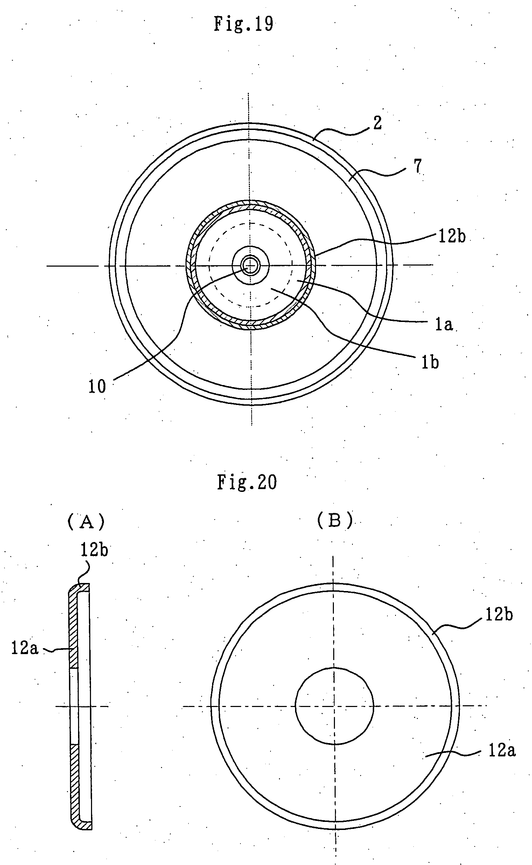

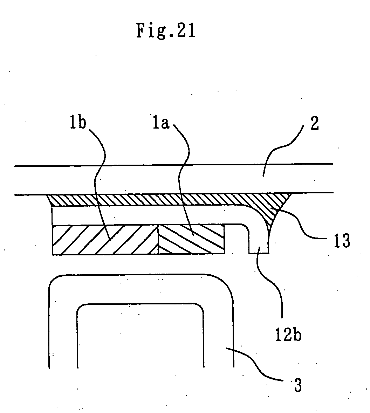

Another example of the miniature motor will be described with reference to FIGS. 18 to 21. FIG. 18 is a diagram showing the same construction as that of the miniature motor illustrated in FIG. 2 except that a magnet yoke is provided. FIG. 19 is a bottom view of the rotor of the miniature motor as seen from below in FIG. 18. FIGS. 20A and 20B are a cross-sectional view and a plan view, respectively, of the magnet yoke. FIG. 21 is a diagram for explaining mounting of the magnet yoke on the rotor case.

An attracting magnet 1 in a hollow cylindrical form is mounted by bonding in a state of being coaxial with the shaft axis and facing the outer surface of the bottom portion in the circular channel portion of the bearing housing 3 on the stator side. In this example, a magnet yoke 12 is interposed between the attracting magnet 1 and the rotor case 2. The magnet yoke itself has a structure such as shown in FIGS. 20A and 20B. The magnet yoke 12 is made of a high-permeability material, for example, iron, cobalt and nickel. The magnet yoke 12 has a disk portion 12a having an opening at its center, and a circumferential wall portion 12b raised substantially perpendicularly from the circumferential end of the disk portion 12a (see FIGS. 20A and 20B). Preferably, the height of the circumferential wall portion 12b is approximately equal to or smaller than the thickness of the attracting magnet 1. A magnetic circuit according to a suitable design is formed by using the circumferential wall portion 12b, and the circumferential wall portion 12b has the function of preventing an adhesive from flowing out.

The magnetic flux path for the attracting magnet 1 illustrated in FIG. 2 is formed only as a magnetic flux path which includes a path in the rotor case 2, and through which the entire magnetic flux circulates virtually, as described above with reference to FIG. 10. In contrast, in the arrangement illustrated in FIG. 18, the magnet yoke 12 is used as a part of the magnetic flux path in place of the rotor case 2. As a result, only the magnetic flux path through which the entire magnetic flux circulates virtually is formed, as is that in the arrangement illustrated in FIG. 2, and any leak from the path can be virtually eliminated or reduced.

Mounting of the magnet yoke 12 on the rotor case 2 will next be described with reference to FIG. 21. Attracting magnets 1a and 1b are bonded to the magnet yoke 12 while being maintained in a state of being coaxial with each other and having their central opening position aligned with that of the magnet yoke 12. The magnet yoke 12 to which the attracting magnet 1 is thus bonded is then bonded to the rotor case 2 while being maintained in a state of being coaxial with the shaft axis. In FIG. 21, the layer of an adhesive having a predetermined thickness is indicated by 13.

There is a need to adjust the spacing between the attracting magnet 1 and the surface of the bearing housing 3 opposed to each other to a predetermined value. If the spacing is excessively large, a predetermined attraction force cannot be obtained. If the spacing is so small that the attraction force is excessively large, the frictional force on the shaft seat 9 supporting the end of the shaft 10 is considerably increased, resulting in an increase in power consumption.

At the time of bonding between the attracting magnets 1a and 1b and the magnet yoke 12, it is virtually impossible to adjust the spacing therebetween, i.e., thickness of the adhesive layer therebetween, to a predetermined value before the adhesive layer is set, because the magnetic attraction force acts therebetween. In the illustrated arrangement, the spacing between the attracting magnet 1 and the bearing housing 3 opposed to each other is adjusted to the predetermined value by adjusting the thickness of the adhesive layer 13 between the magnet yoke 12 and the rotor case 2 to a predetermined value, as shown in FIG. 21. The magnetic flux from the attracting magnet 1 passes through the magnet yoke 12 but does not flows in the rotor case 2, so that virtually no magnetic attraction force acts between the magnet yoke 12 and the rotor case 2. Therefore it is possible to freely adjust the thickness of the adhesive layer 13 before setting. Since the magnetic circuit is formed not via the rotor case 2 but via the magnet yoke 12 as described above, it is possible to reduce the magnetic resistance of the magnetic circuit by selecting a material most suitable for the magnetic circuit as the material of the magnet yoke 12.

A case where the attracting magnet 1 is divided in the radial direction and magnetized so as to have different polarities, for example, as shown in FIG. 2 and where this attracting magnet 1 is combined with the magnetic yoke 12 has been described. However, the attracting magnet 1 may be constituted by a magnet 1a and a magnet 1b made different in thickness from each other, as is that illustrated in FIG. 7, or may be constituted by two magnets 1a and 1b spaced apart from each other in the radial direction, as is that illustrated in FIG. 8. Also, an attracting yoke may be formed in one of the two attracting magnets, as illustrated in FIG. 17. Further, a combination of the magnet yoke and an attracting magnet mounted on the rotor side as described above is possible as well as a combination of the magnet yoke with an attracting magnet mounted on the stator side.

According to the present invention, an attracting magnet of a particular construction is used to avoid magnetization of the shaft. Therefore, magnetic dust in air and iron powder from a surrounding region do not enter the gap between the shaft and the bearing or the gap between the shaft and the shaft seat, and the normal bearing function can be performed with reliability. Also, hysteresis braking and eddy current braking do not occur and no torque loss due to such braking is caused.

The bearing housing made of a high-permeability material for use in the present invention can function as a magnetic path for the attracting magnet at a position close to the attracting magnet. Moreover, this bearing housing can be formed by drawing and can be manufactured at a low cost.

If an attracting magnet formed as a combination of a magnet and a yoke is used, a single-pole magnetic pole configuration for ordinary magnets can be adopted to facilitate manufacture of the magnet. Further, a cost-reduction effect can also be achieved since a smaller amount of magnetic material suffices in obtaining the same attraction force.

## Claims

1. A miniature motor comprising a rotor, a stator and a magnetic attraction mechanism using an attracting magnet for attraction between said rotor and said stator,
wherein said attracting magnet is formed into a hollow cylindrical shape such as to have two flat surfaces between which a predetermined thickness is defined, said attracting magnet being magnetized so as to have different polarities at the inner and outer circumference sides divided in the radial direction in each of its two flat surfaces, and to be reversed in polarity in an interchanging manner between its two flat surfaces, and
wherein one of said flat surfaces of said attracting magnet is opposed to a mated member to be attracted, while the other of said flat surfaces is mounted on the rotor side or the stator side.

2. The motor according to claim 1, wherein said stator is formed by placing a stator core with coils on an outer peripheral portion of a bearing housing which journals a rotor shaft; said bearing housing is made of a high-permeability material and has a flat surface facing said rotor; and said flat surface of said bearing housing is opposed to said attracting magnet mounted on said rotor, or said attracting magnet is mounted on said flat surface of said bearing housing.

3. The motor according to claim 1, wherein said attracting magnet comprises a magnetic material integrally formed.

4. The motor according to claim 1, wherein said attracting magnet comprises two magnets formed separately from each other to be placed on the inner circumference side and the outer circumference side, each of said two magnets having a hollow cylindrical shape.

5. The motor according to claim 4, wherein said two magnets differ in thickness from each other.

6. The motor according to claim 4, wherein one of said two magnets is mounted on said rotor, while the other of said two magnets is mounted on said stator.

7. The motor according to claim 4, wherein the outside diameter of one of said two magnets positioned on the inner circumference side is set approximately equal to or smaller than the inside diameter of the other of said two magnets positioned on the outer circumference side to enable said two magnets to be spaced apart from each other.

8. The motor according to claim 1, wherein said attracting magnet is mounted on the rotor side or the stator side by interposing and bounding a magnetic yoke made of a high-permeability material between said attracting magnet and said rotor or between said attracting magnet and said stator.

9. A miniature motor comprising a rotor, a stator and a magnetic attraction mechanism using an attracting magnet for attraction between said rotor and said stator,
wherein said attracting magnet is formed by combining a magnet formed into a hollow cylindrical shape such as to have two flat surfaces between which a predetermined thickness is defined, and an attracting yoke made of a high-permeability material and formed into a hollow cylindrical shape such as to have two flat surfaces between which a predetermined thickness is defined, said magnet being magnetized so as to have only one polarity in each of the two flat surfaces, the polarities in the two flat surfaces being made different from each other, said magnet and said attracting yoke being set in different positions as seen in the radial direction,
wherein one of said flat surfaces of each of said magnet and said attracting yoke constituting said attracting magnet is opposed to a mated member to be attracted, while the other of said flat surfaces is mounted on the rotor side or the stator side.

10. The motor according to claim 9, wherein said stator is formed by placing a stator core with coils on an outer peripheral portion of a bearing housing which journals a rotor shaft; said bearing housing is made of a high-permeability material and has a flat surface facing said rotor; and said flat surface of said bearing housing is opposed to said attracting magnet mounted on said rotor, or said attracting magnet is mounted on said flat surface of said bearing housing.

11. The motor according to claim 9, wherein the attracting yoke in said attracting magnet is placed on the inner circumference side in the radial direction.

12. The motor according to claim 9, wherein both the magnet and the attracting yoke constituting said attracting magnet are mounted on the rotor side.

13. The motor according to claim 9, wherein said magnet and said attracting yoke differ in thickness from each other.

14. The motor according to claim 9, wherein one of said magnet and said attracting yoke is mounted on said rotor, while the other of said magnet and said attracting yoke is mounted on said stator.

15. The motor according to claim 9, wherein said magnet and said attracting yoke are placed by being spaced apart from each other.

16. The motor according to claim 9, wherein said magnet and said attracting yoke are mounted on the rotor side or the stator side by interposing and bounding a magnetic yoke made of a high-permeability material between said magnet and attracting yoke and said rotor or between said magnet and attracting yoke and said stator.
